Europäisches Patentamt

European Patent Office

Office européen des brevets

(19)

(11) Numéro de publication: **0 325 504**
**A1**

## (12) DEMANDE DE BREVET EUROPEEN

(21) Numéro de dépôt: **89400064.5**

(22) Date de dépôt: **10.01.89**

(51) Int. Cl.4: **G 06 F 15/06**
**G 06 F 15/16**

(30) Priorité: **15.01.88 FR 8800410**

(43) Date de publication de la demande:
**26.07.89 Bulletin 89/30**

(84) Etats contractants désignés:
**DE ES GB IT NL SE**

(71) Demandeur: **THOMSON-CSF**
**51, Esplanade du Général de Gaulle**
**F-92800 Puteaux (FR)**

(72) Inventeur: **Demeure, Alain**
**THOMSON-CSF SCPI 19, avenue de Messine**
**F-75008 Paris (FR)**

(74) Mandataire: **Grynwald, Albert et al**
**THOMSON-CSF SCPI**
**F-92045 PARIS LA DEFENSE CEDEX 67 (FR)**

(54) Calculateur de grande puissance et dispositif de calcul, comportant une pluralité de calculateurs.

(57) L'invention a principalement pour objet un dispositif de calcul comportant une pluralité de calculateurs vectoriels. Les calculateurs sont reliés entre eux par des liaisons hiérarchisées (202,203) permettant d'une part des échanges massifs de données au niveau hiérarchique inférieur et d'autre part la gestion non perturbatrice des tâches au niveau hiérarchique supérieur.

Chaque calculateur comprenant plusieurs processeurs élémentaires identiques comporte deux types d'unité de commande : l'une pour le mode de fonctionnement vectoriel, l'autre pour le mode de fonctionnement composante. Il comporte également 2 types de bus, l'un pour les échanges sporadiques, l'autre pour les échanges permanents.

Les ressources du calculateur forment 5 processeurs : un processeur de calcul et 4 processeurs d'échanges permettant de mener 4 activités principales concurremment.

L'invention s'applique au traitement d'informations et à la réalisation de calculateurs de très grande puissance.

L'invention s'applique notamment au traitement du signal.

FIG.2

EP 0 325 504 A1

**Description**

## CALCULATEUR DE GRANDE PUISSANCE ET DISPOSITIF DE CALCUL COMPORTANT UNE PLURALITE DE CALCULATEURS.

L'invention a pour objet un calculateur dont la puissance de calcul est de l'ordre de plusieurs centaines de "Millions d'Opérations Par Seconde" ("MOPS").

Les besoins de puissance de calcul augmentant on essaie d'améliorer les performances des moyens de calcul. Ces recherches sont menées principalement dans deux voies.

D'une part, on cherche à augmenter la puissance des unités de calcul.

D'autre part, on essaie d'utiliser une pluralité d'unités de calcul par dispositif de calcul.

Le dispositif de calcul selon la présente invention atteint de très fortes puissances de calcul en utilisant ces deux voies.

Dans un dispositif de calcul de type connu, l'augmentation du nombre d'unités de calcul, appelé dans la suite de la description calculateur, se solde par une perte globale de l'efficacité du dispositif de calcul.

En effet, dans ces dispositifs les moyens pour assurer la gestion sont mal adaptés car réalisés par l'unité de calcul ce qui rend la fonction de gestion très coûteuse en temps du fait de la répartition des calculs sur plusieurs calculateurs. De même, les échanges de données intermédiaires et les messages de synchronisation interfèrent sur les mêmes supports matériels.

Le dispositif de calcul objet de la présente invention remédie à ces inconvénients principalement en séparant matériellement l'organe de gestion et les moyens de calcul faisant apparaître une hiérarchie du calculateur sur 2 niveaux.

A la hiérarchie de matériels correspond une hiérarchie de moyens de communication. Ainsi, chacun des niveaux des différents calculateurs sont interconnectés par des liaisons propres au niveau.

Cette hiérarchie facilite la constitution d'un dispositif de calcul exécutant simultanément une pluralité d'instructions sur une pluralité de données (MIMD en terminologie anglo-saxonne) en utilisant une pluralité de calculateurs à organisation parallèle chaque calculateur de ce type étant susceptible d'appliquer une même instruction à une pluralité de données (SIMD en terminologie anglo-saxonne). Un exemple d'un tel calculateur a été décrit dans le Brevet français 83 15649 déposé par la Demanderesse.

L'invention a principalement pour objet un calculateur à organisation parallèle tel que décrit dans les revendications.

L'invention a aussi pour objet les dispositifs particuliers permettant la coopération de plusieurs calculateurs à organisation parallèle sans pour autant que cette coopération perturbe le déroulement des calculateurs.

L'invention sera mieux comprise au moyen de la description ci-après et des figures annexées données comme des exemples non limitatifs parmi lesquels :

- la figure 1 est un schéma fonctionnel d'un exemple de réalisation du dispositif de calcul selon la présente invention ;
- la figure 2 et un schéma d'un exemple de réalisation du calculateur selon la présente invention ;
- la figure 3 est un schéma d'un exemple de réalisation d'un calculateur susceptible d'être mis en oeuvre dans un dispositif selon la présente invention ;
- la figure 4 est un schéma fonctionnel de l'unité de commande d'un calculateur selon la présente invention ;
- la figure 5 est un schéma du processeur de calcul d'un calculateur mis en oeuvre dans le dispositif de calcul selon la présente invention ;
- la figure 6 est un schéma fonctionnel d'un processeur mis en oeuvre dans le dispositif selon la présente invention ;
- la figure 7 est un schéma fonctionnel d'un processeur mis en oeuvre dans le dispositif selon la présente invention ;
- la figure 8 est un schéma fonctionnel d'un processeur mis en oeuvre dans le dispositif selon la présente invention ;
- la figure 9 est un schéma fonctionnel d'un processeur mis en oeuvre dans le dispositif selon la présente invention ;
- la figure 10 est un schéma de l'exemple préféré de réalisation du dispositif de calcul selon la présente invention.

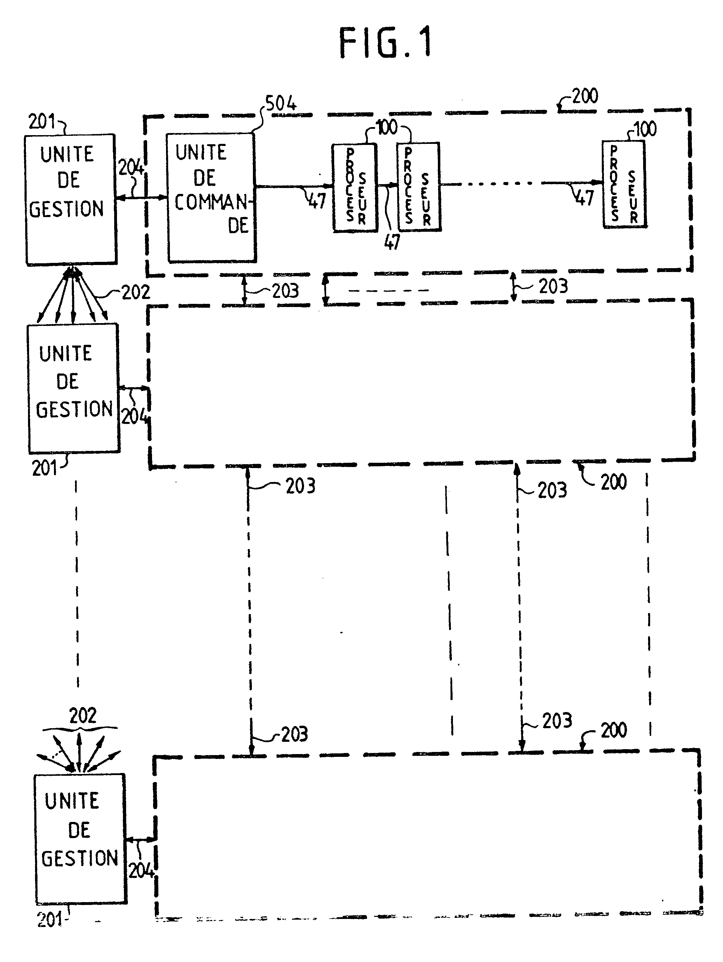

Sur les figures 1 à 10, on a utilisé les mêmes références pour désigner les mêmes éléments.

Sur la figure 1, on peut voir un dispositif de calcul selon la présente invention.

Le dispositif de calcul comporte une pluralité de calculateurs. Chaque calculateur se compose d'un niveau I 200 et d'un niveau II 201. Le niveau I comporte une unité de commande 504 connectée à une pluralité de processeurs élémentaires 100.

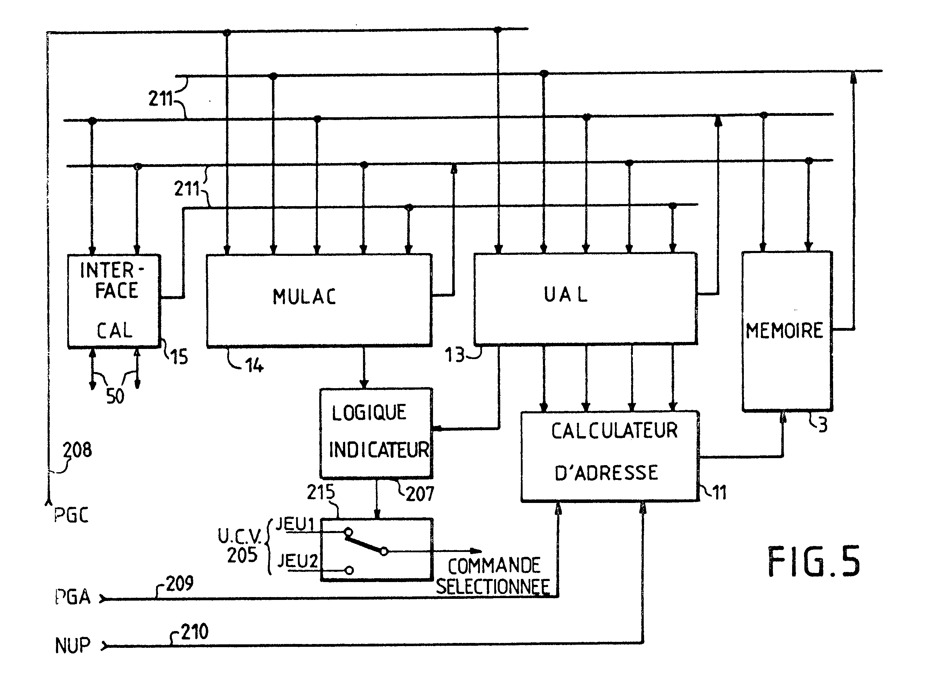

Pour effectuer le traitement du signal, on utilisera avantageusement le processeur élémentaire 100 dont l'organisation est illustrée sur la figure 5.

Les processeurs 100 sont appelés "élémentaires" car ils constituent les éléments de calcul de chaque calculateur. Cela n'implique pas du tout que les processeurs élémentaires 100 ont eux-mêmes une faible puissance de calcul.

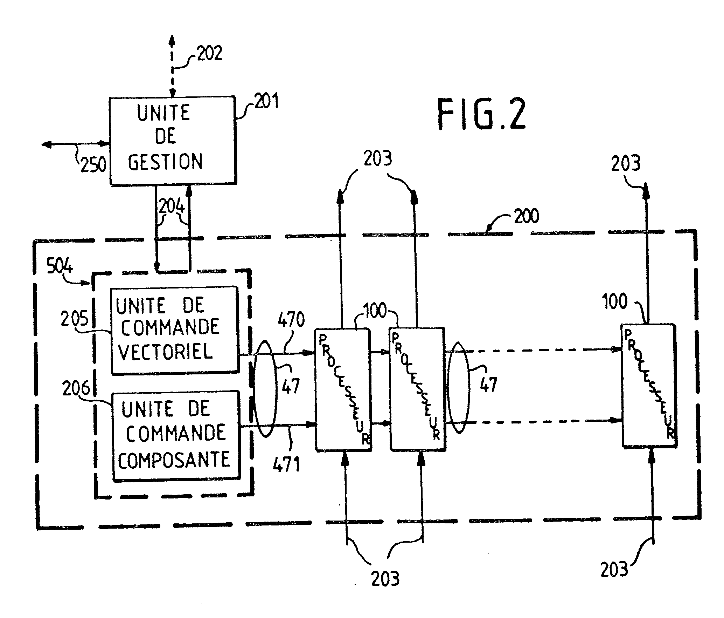

Comme illustré sur la figure 2, l'unité de commande 504 comporte une unité de commande vectorielle 105 et une unité de commande composante 206.

L'unité de commande 504 est reliée par un bus 47 aux processeurs élémentaires 100.

L'unité de commande 504 est reliée par un bus 204 à l'unité de gestion 201.

L'architecture étant à flots d'instructions simples et flots de données multiples (SIMD), l'unité de commande 504 fournit aux processeurs élémentaires 100 l'instruction à traiter par l'intermédiaire du bus 47.

Les niveaux I de chaque calculateur comportent avantageusement le même nombre de processeurs élémentaires 100 et il y a autant d'anneaux 203 que de processeurs élémentaires par calculateur. Il y a aussi autant d'abonnés par anneau que de calculateurs.

Les unités de gestion 201 assurent la supervision, l'ordonnancement et la coordination de l'exécution des tâches par les unités de niveau I 200.

Les unités de gestion 201 sont reliées entre elles par un ensemble de liaisons 202. L'architecture des liaisons 202 dépend des performances désirées et du nombre de calculateurs que comporte le dispositif de calcul.

Les interconnexions décrites ci-dessus sont indépendantes des traitements à effectuer. L'architecture selon la présente invention permet notamment, des traitements numériques du signal, de filtrage en particulier.

Avantageusement, de tels traitements conduisent à des calculs presque toujours parallélisables.

On décrit maintenant la figure 2 plus en détail. L'unité de commande vectorielle 205 et l'unité de commande composante 206 sont reliées par des chemins séparés, au niveau du bus monodirectionnel 47 à chaque processeur élémentaire 100. L'unité de commande vectorielle 205 pilote le traitement simultané par les processeurs élémentaires 100 de toutes les composantes d'un vecteur par la liaison 470. Elle délivre des codes d'opérations vers les parties opératives des processeurs élémentaires 100, des codes définissant l'aiguillage des données vers ces parties opératives, et enfin 3 paramètres concernant les parties opératives sur les données et les adresses. L'unité de commande composante 206 est sollicitée chaque fois que l'on ne peut pas paralléliser les traitements sur l'ensemble d'un vecteur. Elle relaie l'unité de commande vectorielle pour des commandes ayant un caractère répétitif, par la liaison 471. Cette unité assure uniquement le déplacement des données et délivre des codes de transferts vers les processeurs élémentaires 100.

L'unité de commande 504 est reliée par un bus 204 bidirectionnel à l'unité de gestion 201. L'unité de gestion 201 effectue l'autorisation et le paramétrage de lancement des tâches de l'unité de commande 504. En retour, l'unité de commande 504 transmet à l'unité de gestion 201 des compte rendus d'exécution.

L'unité de gestion 201 comporte par exemple un microprocesseur associé à des mémoires vives (RAM en terminologie anglo-saxonne) et des mémoires mortes (PROM ou EPROM en terminologie anglo-saxonne).

L'unité de gestion 201 comporte les liaisons 202 nécessaires pour être reliées à d'autres calculateurs identiques au calculateur illustré sur la figure 2.

Avantageusement, l'unité de gestion 201 comporte par exemple deux liaisons standardisées série et/ou parallèle 250. Ces liaisons permettent la mise au point des programmes d'application. Avantageusement, l'unité de gestion 201 est bâtie autour d'un microprocesseur.

Il est avantageux d'adapter le bus 204 pour que le microprocesseur voit dans son espace mémoire la totalité, ou la quasi totalité des organes de stockage mémoire de l'unité de commande et notamment :
- les registres de travail,
- la table des coefficients,
- la mémoire des microprogrammes.

L'unité de gestion 201 accède à ces zones pour :
- les chargements initiaux,
- le paramétrage et l'autorisation des tâches de l'unité de niveau I 200,
- la lecture de compte rendus comme par exemple la fin de tâches, le résultat d'auto-tests, la détection d'erreurs, et ceci sans interruption de l'unité de niveau I 200.

Ainsi, l'unité de gestion 201 est capable d'anticiper sur le paramétrage de chacune des tâches futures sans perturber l'unité de commande 504.

Ainsi, pour un ensemble de calculateurs les unités de gestion sont notamment capables de piloter le déroulement cohérent d'un ensemble de tâches réparties sur un ensemble de calculateurs : les unités de niveau I 200 jouant un rôle d'exécutant pour le dispositif de calcul.

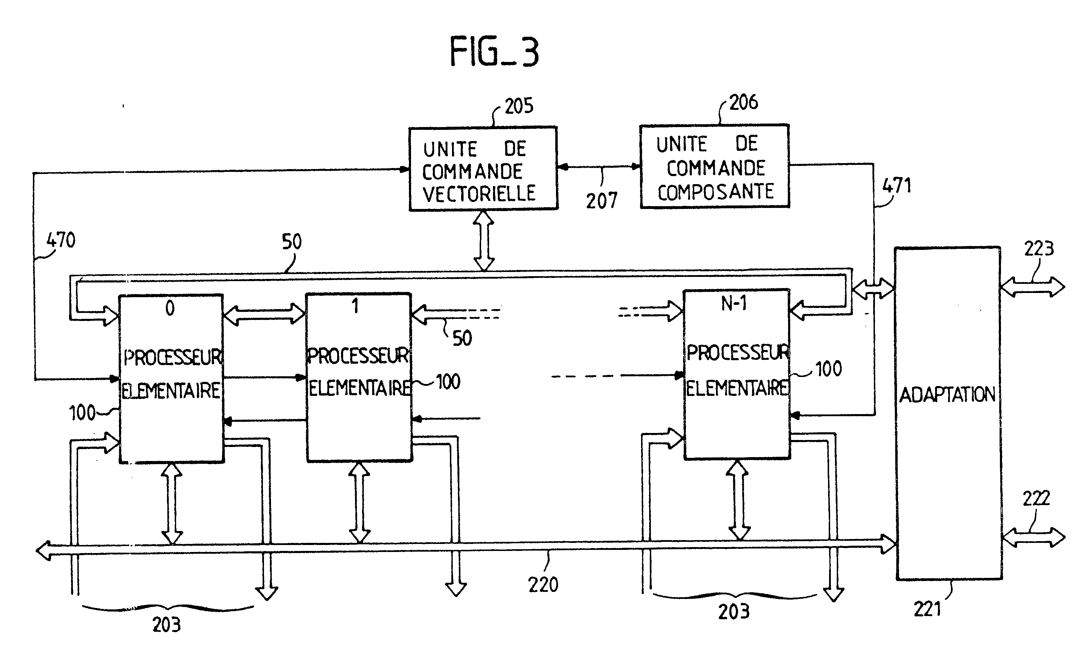

Sur la figure 3, on peut voir un exemple de réalisation de l'unité de niveau I 200 selon la présente invention. Cette unité présente l'avantage d'être reconfigurable pour minimiser les conséquences de la panne éventuelle d'un processeur élémentaire 100.

Sur la figure, on a représenté par des traits doubles les liaisons destinées à transmettre des données et par des traits simples les liaisons destinées à transmettre les commandes.

Elle comporte N processeurs élémentaires 100. Chaque processeur élémentaire 100 est constitué par un ensembles de ressources de calcul nécessaires au traitement du signal. Un exemple du processeur élémentaire 100 est illustré sur la figure 5.

Les processeurs élémentaires 100 comportent également une mémoire de données.

Une liaison de type bus 220 est réservée aux entrées-sorties présentant un caractère permanent. Cette liaison supporte une adaptation 221 pour devenir un premier canal d'entrée-sortie 222 utilisé pour les échanges permanents.

Les processeurs élémentaires 100 communiquent entre eux par une liaison 50. Cette liaison 50 a une

EP 0 325 504 A1

organisation en anneau.

Cet anneau est utilisé :
- pour une activité de calcul (passation de résultats intermédiaires),
- pour une activité de réarrangement de tableaux de données,
- pour une activité d'entrées-sorties.

Pour cette dernière activité, l'anneau 50 supporte l'adaptation 221 pour devenir un deuxième canal d'entrée-sortie 223 utilisé pour les échanges sporadiques.

L'anneau 50 est connecté à l'unité de commande vectorielle. Cette connexion permet :
- d'échanger des données,
- de passer des compte rendus de test,
- d'observer des valeurs intermédiaires en mise au point (dans le sens processeurs élémentaires vers unité de commande),
- de fournir des ordres de configuration (dans le sens unité de commande vers processeurs élémentaires).

Sur la figure 3 apparaît au niveau de chaque processeur élémentaire la fraction d'anneau 203 permettant de se connecter aux processeurs élémentaires de même rang des 2 calculateurs voisins, le rang étant le numéro affecté à chaque processeur élémentaire 100 numérotés par exemple de gauche à droite de 0 à N-1.

A chaque cycle élémentaire, l'unité de commande vectorielle émet vers les processeurs élémentaires :
- un coefficient,
- des paramètres d'adressage,
- un ensemble de codes d'opération.

Ceci est connu et décrit dans le Brevet français 83 15649 déposé par la Demanderesse.

L'unité de commande reçoit des processeurs 3 résultats synthétiques :
- 2 signaux d'erreurs,
- 1 signal de condition vraie dans au moins un processeur élémentaire.

Lorsque le traitement de données relève de l'unité de commande composante, elle est paramétrée par l'unité de commande vectorielle via la liaison 207. Cette liaison achemine les paramètres tels que : nombre de composantes, sens du transfert, temporisation entre chaque transfert.

Dans le niveau I, 4 activités sont menées concurremment :
- une activité calcul,
- trois activités d'échanges par les anneaux 203, l'anneau 50 associé à 223, le bus 220 associé à 222.

Lorsque les données traitées sont des vecteurs, on est en "mode vectoriel" et une seule activité à la fois est traitée par cycle élémentaire. Lorsque ces données sont des composantes de vecteurs, on est en "mode composante" et les 4 activités peuvent être traitées simultanément par cycle élémentaire.

Ces 4 activités mettent en oeuvre les "ressources" que l'on dispose dans l'ensemble des processeurs élémentaires 100 et dans l'unité de commande 504. A chaque activité un certain nombre de ressources sont allouées formant :
- un processeur calcul,
- un processeur sporadique,
- un processeur permanent,
- deux processeurs d'échanges qui sont réservés aux échanges intercalculateurs au sein du dispositif de calcul.

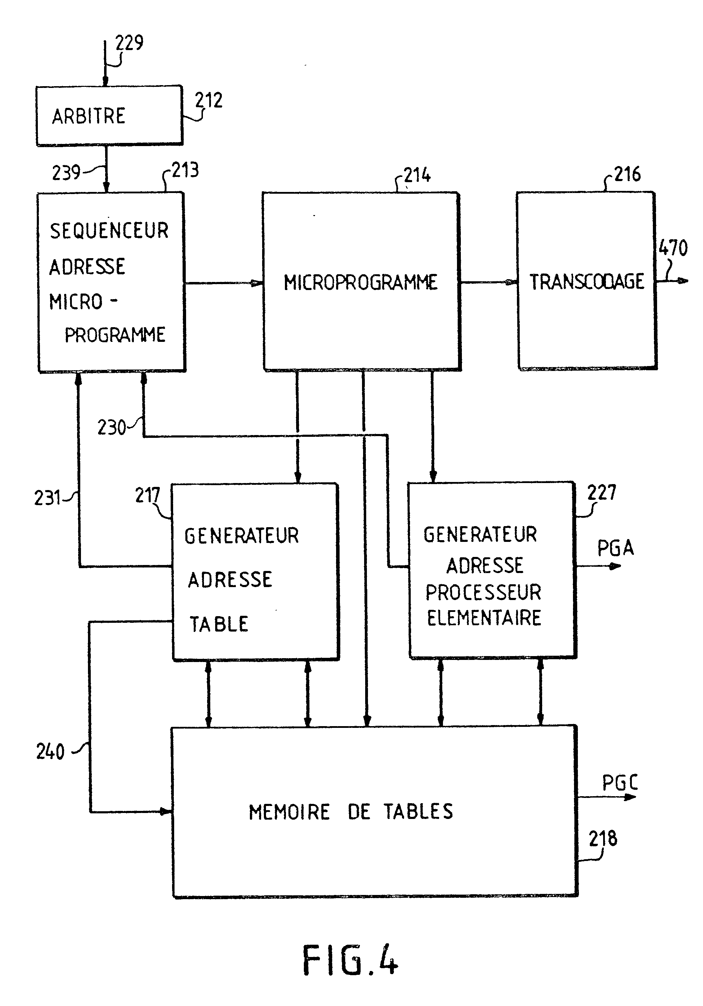

Sur la figure 4, on peut voir le schéma fonctionnel de l'unité de commande 504.

Le générateur d'adresses processeur élémentaire "GAP" 227 calcule une adresse de déplacement prise dans les processeurs élémentaires comme un paramètre d'adressage "PGA" et teste l'appartenance de ce déplacement à un intervalle. Cette fonction est réalisée par 2 circuits connus du type microcontrôleurs.

Le générateur d'adresses table "GAT" 217 gère un pointeur permettant d'accéder dans une table implantée dans le bloc "TAB" 218, et qui est adressée par la liaison 240, à un coefficient "PGC" qui sera pris par les processeurs élémentaires. Cette fonction est également réalisée par 2 microcontrôleurs. L'unité de commande a une structure d'une machine programmable à un seul niveau. Elle comporte donc une mémoire de microprogramme 214 adressée par un séquenceur adresse microprogramme 213. Les contrôles d'intervalles, les gestions de boucle, donnent lieu à des branchements conditionnels ou des éclatements sur les indicateurs fournis par le générateur adresse processeur élémentaire 227 et le générateur adresse table 217 respectivement au moyen des liaisons 230 et 231. La mémoire des microprogrammes 214 est adressée par un séquenceur 213. Elle est aussi reliée à un dispositif de transcodage 216 qui fournit une commande 470 aux processeurs élémentaires 100 non représentés sur la figure 4.

En rappelant que 4 activités principales se déroulent concurremment au niveau I, à chaque cycle élémentaire, un dispositif d'arbitrage 212 alloue à l'activité la plus prioritaire la ressource "unité de commande vectorielle".

En fonction de cet arbitrage, le compteur ordinal de l'activité choisie est sélectionné dans le séquenceur adresse microprogramme 213 par la liaison 239.

Pour une activité donnée, les modes vectoriel et composante alternent. Le retour en mode vectoriel s'effectue lorsque toutes les composantes d'un vecteur ont été traitées. Ce retour est déclenché par l'unité de commande composante 206 sur détection de la dernière composante traitée et se traduit par une requête 229 transmise à l'arbitre 212.

Par ailleurs, la mémoire des microprogrammes 214 délivre directement les commandes de pilotage de

4

"GAP", "GAT" et "TAB". La mémoire de tables ou table 218 a un double rôle de stockage :
- tables des coefficients,
- extension de la mémoire de travail de "GAT" et de "GAP" réalisée par 4 microcontrôleurs.

Le processeur calcul met en oeuvre dans les processeurs élémentaires un certain nombre de ressources représentées schématiquement sur la figure 5. Ce processeur comporte un élément de calcul 14 comportant par exemple un multiplieur, un accumulateur et des registres "MULAC". Dans un exemple de réalisation, il comporte quatre registres opérande, un registre résultat, un registre de travail, de "MULAC" 14 est relié aux chemins de données 211. Sur les mêmes chemins 211 est connectée une unité arithmétique et logique UAL 13 (ALU en terminologie anglo-saxonne). L'unité arithmétique et logique 13 comporte par exemple quatre registres dédiés au calcul sur les données et quatre registres dédiés au calcul sur les adresses. L'unité arithmétique et logique 13 est reliée d'autre part à la logique indicateur 207 et au calculateur d'adresse 11. D'autre part un interface bus en anneau 15 et la mémoire 3 du processeur sont reliés aux chemins 211. L'interface bus 15 est reliée à l'anneau 50 reliant les divers processeurs élémentaires et l'unité de commande 205.

Le "MULAC" 14 et l'unité arithmétique et logique 13 sont reliées à la logique indicateur 207.

Le calculateur d'adresse 11 est relié à la mémoire 3. Le "MULAC" 14 et l'unité arithmétique et logique reçoivent par une liaison 208 un coefficient "PGC" commun à tous les processeurs. Ce coefficient est, soit une constante pour le "MULAC" ou l'unité arithmétique et logique, soit une initialisation des registres dédiés au calcul d'adresse. Le calculateur d'adresse reçoit par une liaison 209 un paramètre d'adressage "PGA". Ce paramètre d'adresse exprime, soit un déplacement, soit une origine selon le mode d'adressage utilisé par le calculateur d'adresse 11. Le calculateur d'adresse 11 reçoit par une liaison 210 le numéro du processeur pilote "NUP" dont le rôle est décrit dans le Brevet français 83 15649 déjà cité. La logique indicateur 207, à partir des quatre indicateurs provenant d'un registre de l'unité arithmétique et logique 13, d'un registre provenant du "MULAC" 14, ou d'une condition antérieurement élaborée, permet à chaque processeur élémentaire de choisir parmi 2 jeux de commande donnés par l'unité de commande vectorielle 205 par l'intermédiaire d'un sélecteur 215.

Le partage des différentes ressources des processeurs élémentaires 100 par les processeurs calcul "CAL", sporadique "SPOR", permanent "PERM", et d'échanges "INTERI", "INTERO" est donné dans le tableau 1. Les cases de ce tableau contiennent une lettre V si l'utilisation est en mode vectoriel, une lettre C si l'utilisation est en mode composante.

TABLEAU 1

| | | PROCESSEURS | | | | |
|---|---|---|---|---|---|---|
| | | CAL | SPOR | PERM | INTERI | INTERO |
| RESSOURCES | Mémoire | V | V | V | V | V |
| | Unité Arithmétique et logique | V | V | | | |
| | Calculateur d'Adresse | V | V | V | V | V |
| | Logique Indicateur | V | | | | |
| | Multiplieur Accumulateur | V | | | | |
| | Interface CAL | V | | | | |
| | Interface SPOR | | C | | | |
| | Interface PERM | | | C | | |
| | Interface INTERI | | | | C | |
| | Interface INTERO | | | | | C |

On rappelle que le niveau I permet au même instant d'utiliser plusieurs ressources notées V par un seul processeur, plusieurs ressources notées C par plusieurs processeurs.

L'interface notée "CAL" correspond au circuit 15 de la figure 5, les autres interfaces sont définis dans la suite de la description.

Pour les ressources partagées "CAD" 11 et UAL 13, les processeurs disposent de leurs propres mémoires aux registres, le partage se limitant aux circuits dépourvus de fonction mémoire.

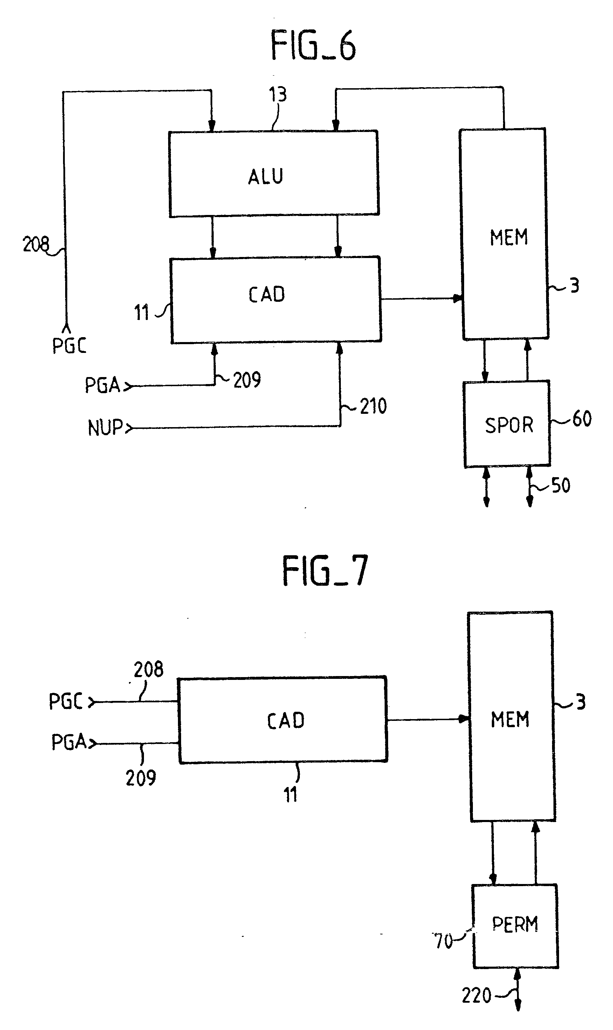

Le schéma fonctionnel du processeur sporadique "SPOR" vu de l'utilisateur est représenté sur la figure 6. Ce processeur utilise l'UAL, le "CAD" et la mémoire. Pour l'UAL 13 il y a deux registres dédiés au calcul sur les données et deux registres dédiés au calcul sur les adresses. Le circuit "SPOR" est un interface spécifique à ce processeur comportant des registres qui permettent de décaler les données entre les processeurs élémentaires par l'anneau 50.

Le schéma fonctionnel du processeur permanent "PERM" ou de l'utilisateur est représenté sur la figure 7. Ce processeur utilise le "CAD" et la mémoire. Le "CAD" se limite à effectuer l'addition entre un registre de base préalablement chargé par "PGC" et un déplacement "PGA". Le circuit "PERM" 70 est un interface spécifique à ce processeur permettant l'accès mot à mot au bus 220. Il comporte des registres permettant d'échanger globalement un vecteur qui est acheminé composante par composante par le bus 220.

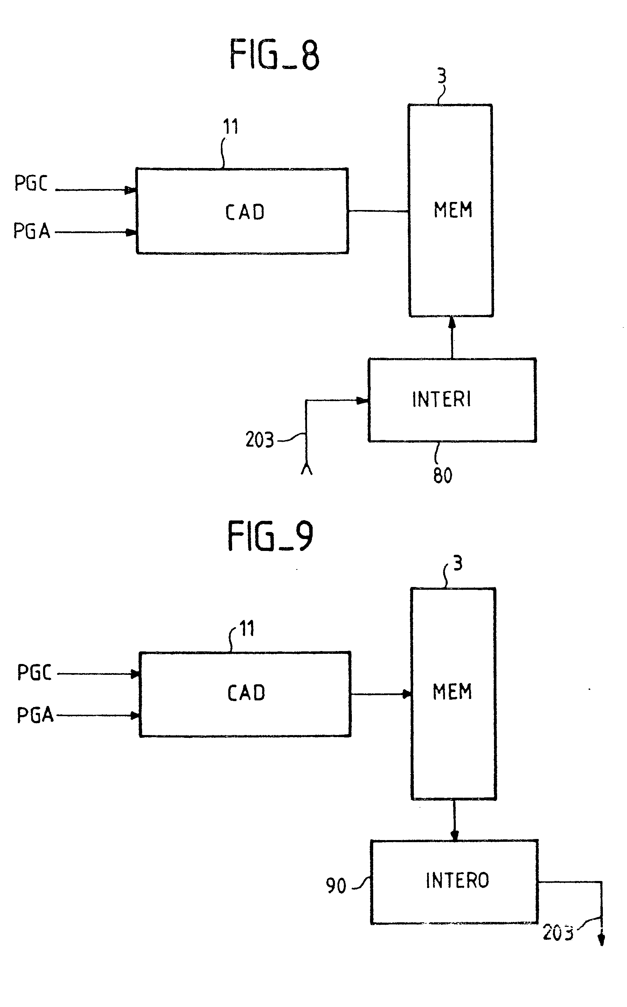

Le schéma fonctionnel des 2 processeurs d'échanges est représenté sur les figures 8 et 9. Comme pour le processeur "PERM", chaque processeur utilise les ressources "CAD" et mémoire, plus un interface spécifique "INTERI" 80 ou "INTERO" 90. Ces interfaces sont formés, de façon classique, de registres et d'amplificateurs de lignes.

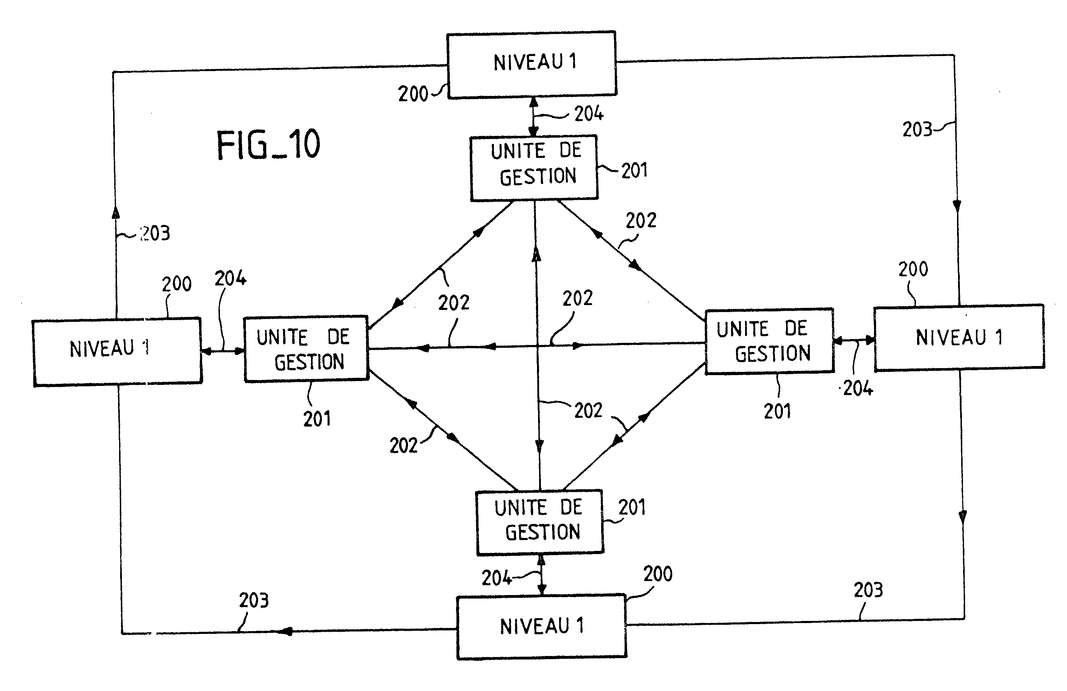

Sur la figure 10, on peut voir un exemple de réalisation préféré du dispositif de calcul selon la présente invention.

Le dispositif illustré sur la figure 10 comporte quatre calculateurs. Chaque calculateur comporte une unité de gestion 201 reliée par un bus 204 à l'unité de niveau I 200. Chaque unité de gestion 201 est reliée par des liaisons bidirectionnelles à toutes les autres unités de gestion 201. Par ces liaisons circulent les messages nécessaires au déroulement cohérent de l'ensemble des tâches réparties dans l'ensemble du dispositif de calcul. De plus, les liaisons 202 supportent aussi le protocole supérieur encadrant l'échange de blocs de vecteurs par l'anneau 203. Cet anneau relie tous les dispositifs de niveau I 200 et permet l'échange massif des données entre calculateurs. Dans les cas favorables ou tout couple émetteur-récepteur de messages est constitué de calculateurs adjacents l'anneau 203 peut véhiculer à chaque instant jusqu'à quatre vecteurs.

Le dispositif de calcul se reconfigure automatiquement. Pour cela le nombre de processeurs élémentaires 100 est supérieur au nombre maximum de processeurs élémentaires actifs de manière à disposer de processeurs élémentaires en attente. En cas d'anomalie détectée par un test, un logiciel résident permet de remplacer le processeur élémentaires défectueux par un processeur jusqu'ici en attent. Les kprocesseurs élémentaires de même rang des différents calculateurs sont dans le même état actif ou en attente.

Dans le dispositif de calcul, un calculateur impose une base de temps unique aux autres calculateurs.

Pour l'exemple de réalisation préféré de l'invention comportant 4 calculateurs, on a 32 processeurs élémentaires (actifs) par calculateur. On obtient une puissance de calcul d'environ 200 Millions Opérations Par Seconde. Le débit entre calculateurs est de l'ordre de 20 Millions mots/seconde en entrée et en sortie (1 mot étant égal à 32 bits).

Quant au débit avec l'extérieur, indépendant du nombre de processeurs élémentaires, il est de l'ordre de 6 Millions mots/seconde en entrée et en sortie.

Il est bien entendu que l'utilisation de plus de deux niveaux de hiérarchie dans les liaisons entre les calculateurs ne sort pas du cadre de la présente invention.

L'invention s'applique au traitement d'informations et à la réalisation de dispositifs de calcul de très grande puissance notamment pour le traitement du signal.

## Revendications

1. Calculateur comportant une unité de commande (504) qui pilote une pluralité de processeurs (100) susceptibles d'exécuter simultanément la même instruction sur les données et des moyens de communication entre calculateurs, caractérisé par le fait que les moyens de communication entre calculateurs comprennent des liaisons (203) accessibles aux processeurs (100) formant un niveau de hiérarchie inférieur et une unité de gestion (201) contrôlant des liaisons (202) d'un niveau de hiérarchie supérieur susceptibles d'assurer la supervision, l'ordonnancement et/ou la coordination des tâches.

2. Calculateur selon la revendication 1, caractérisé par le fait que le nombre de liaisons (203) de niveau hiérarchique inférieur est égal au nombre de processeurs (100) actifs dans l'état de fonctionnement normal du calculateur.

3. Calculateur selon la revendication 1 ou 2, caractérisé par le fait que chaque calculateur comporte une unité de commande vectorielle (205), associé à un mode de fonctionnement vectoriel et à une première liaison (470) vers les processeurs (100) ; et une unité de commande composante (206), associée à un mode de fonctionnement composante, qui est mis en oeuvre chaque fois que l'on ne peut pas paralléliser les traitements sur l'ensemble d'un vecteur, et à une seconde liaison (471) vers les processeurs (100).

4. Calculateur selon la revendication 1,2 ou 3, caractérisé par le fait qu'il comporte des moyens d'adaptation (221) comportant un premier bus (223) susceptible d'être relié à un bus en anneau (50) constituant un canal d'entrée-sortie réservé aux échanges sporadiques de données et un deuxième bus (222) susceptible d'être relié à un bus (220) relié aux processeurs élémentaires (100) constituant un deuxième canal d'entrée-sortie réservé aux échanges permanents de données.

5. Calculateur selon les revendications précédentes, caractérisé par le fait que au moins 4 activités principales sont menées concurremment, chacune disposant dans les processeurs (100) des ressources nécessaires en partageant des ressources communes lorsqu'un vecteur est traité par des ressources particulières lorsque les composantes d'un vecteur sont traitées.

6. Dispositif de calcul comportant une pluralité de calculateurs interconnectés, chaque calculateur comportant une pluralité de processeurs (100) caractérisé par le fait qu'il comporte des bus (203) et des dispositifs de contrôle de bus associés hiérarchisés comportant au moins un bus de niveau hiérarchique inférieur (203) reliant les calculateurs et susceptible de transmettre à chaque cycle de calcul des données et/ou des commandes et un bus de niveau hiérarchique supérieur (202) reliant entre eux au moins deux calculateurs permettant de coordonner et/ou de synchroniser et/ou de répartir les tâches à exécuter.

7. Dispositif selon la revendication 6, caractérisé par le fait que la hiérarchie des bus comporte uniquement deux niveaux et en ce que une unité de gestion (201) supervise les échanges de données, au niveau hiérarchique le plus haut pour chaque calculateur.

7

8. Dispositif selon la revendication 6 ou 7, caractérisé par le fait que chaque calculateur est relié à trois calculateurs voisins.

9. Dispositif selon la revendication 6 ou 7, caractérisé par le fait que chaque calculateur est relié à tous les autres calculateurs.

10. Dispositif selon la revendication 6,7,8 ou 9, caractérisé par le fait que tous les processeurs (100) d'un même calculateur exécutent la même instruction simultanément (SIMD).

11. Dispositif selon la revendication 6,7,8,9 ou 10, caractérisé par le fait que chaque calculateur est susceptible d'exécuter une instruction différente à chaque cycle de calcul (MIMD).

12. Dispositif selon la revendication 6,7,8,9,10 ou 11, caractérisé par le fait que le bus (203) du premier niveau hiérarchique est un bus en anneaux.

13. Dispositif selon la revendication 12, caractérisé par le fait que le bus en anneaux (203) relie les processeurs (100), ayant le même numéro, des calculateurs interconnectés.

# FIG.1

# FIG.2

# FIG_3

UNITE DE COMMANDE VECTORIELLE — 205

UNITE DE COMMANDE COMPOSANTE — 206

207

471

470

50

223

0 PROCESSEUR ELEMENTAIRE

1 PROCESSEUR ELEMENTAIRE — 100

50

N-1 PROCESSEUR ELEMENTAIRE — 100

100

100

ADAPTATION

220

203

203

222

221

EP 0 325 504 A1

FIG.4

FIG.5

EP 0 325 504 A1

# FIG_6

# FIG_7

## FIG_8

PGC →

PGA →

11

CAD

3

MEM

203

INTERI

80

## FIG_9

PGC →

PGA →

11

CAD

3

MEM

90

INTERO

203 →

FIG_10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 201 797 (NCUBE CORP.) <br> * Revendications 8-11; page 7, lignes 12-14; page 9, lignes 20-34; page 10, paragraphe 3.2.1.: "System control board"; figure 1 * <br> --- | 1,6-9, 11 | G 06 F 15/06 <br> G 06 F 15/16 |
| Y | US-A-4 591 981 (KASSABOV) <br> * En entier * <br> --- | 1-13 | |
| Y | EP-A-0 226 096 (ELETTRONICA SAN GIORGIO-ELSAG SpA) <br> * Résumé; figure 1 * <br> --- | 1-13 | |
| Y | US-A-3 537 074 (STOKES et al.) <br> * Colonne 2, ligne 56 - colonne 3, ligne 42; figures 1,2 * <br> --- | 1,6-11 | |
| Y | PROCEEDINGS OF THE 5TH INTERNATIONAL CONFERENCE ON PATTERN RECOGNITION, Florida, 1-4 décembre 1980, vol. 1 des 2, pages 309-317, IEEE, New York, US; P.H. SWAIN et al.: "Multiprocessor implementation of image pattern recognition: a general approach" <br> * Page 310, paragraphe 2.2: "Multiple-SIMD Systems"; figures 2.1,2.2 * <br> --- | 1,6-11 | **DOMAINES TECHNIQUES RECHERCHES (Int. Cl.4)** <br><br> G 06 F 15 |
| Y | IEE PROCEEDINGS-E/COMPUTERS AND DIGITAL TECHNIQUES, vol. 134, no. 2, partie E, mars 1987, pages 87-92, Stevenage, Herts, GB; C. JESSHOPE et al.: "Techniques for implementing two-dimensional wafer-scale processor arrays" <br> * Figure 2 * <br> ---          -/- | 2 | |

Le présent rapport a été établi pour toutes les revendications

| Lieu de la recherche | Date d'achèvement de la recherche | Examinateur |
|---|---|---|
| LA HAYE | 14-04-1989 | SCHENKELS P.F. |

Office européen
des brevets

RAPPORT DE RECHERCHE EUROPEENNE

Numero de la demande

EP 89 40 0064

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 085 435 (HITACHI)<br>* Résumé; page 6, ligne 15 - page 9, ligne 6; figure 3 *<br>--- | 3,5 | |
| Y | CONFERENCE PROCEEDINGS OF THE 12TH ANNUAL INTERNATIONAL SYMPOSIUM ON COMPUTER ARCHITECTURE, Boston, Massachusetts, 17-19 juin 1985, pages 136-144, IEEE, New York, US; R.N. IBBETT et al.: "MU6V: A parallel vector processing system"<br>* Résumé; figure 2 *<br>--- | 3,5 | |
| Y | IEEE TRANSACTIONS ON ACOUSTICS, SPEECH, AND SIGNAL PROCESSING, vol. ASSP-34, no. 5, octobre 1986, pages 1310-1318, IEEE, New York, US; J.-I. TAKAHASHI et al.: "A ring array processor architecture for highly parallel dynamic time warping"<br>* Figures 3,4 *<br>--- | 4,12 | |
| Y | PROCEEDINGS OF THE 1985 INTERNATIONAL CONFERENCE ON PARALLEL PROCESSING, 20-23 août 1985, pages 649-651, IEEE, New York, US; L.D. CORAOR et al.: "A reconfigurable multiprocessor"<br>* Figures 1,2 *<br>--- | 4,12 | |
| Y | EP-A-0 186 150 (HITACHI)<br>* Figure 12 *<br>----- | 12,13 | |

DOMAINES TECHNIQUES RECHERCHES (Int. Cl.4)

Le présent rapport a été établi pour toutes les revendications

| Lieu de la recherche | Date d'achèvement de la recherche | Examinateur |
|---|---|---|
| LA HAYE | 14-04-1989 | SCHENKELS P.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)